# FASCICULE DE BREVET EUROPEEN

(11) **EP 2 031 234 B1**
(45) Date de publication et mention de la délivrance du brevet: **13.10.2010**
(21) Numéro de dépôt: 08161860.5
(22) Date de dépôt: 05.08.2008
(51) Int. Cl.: F02G 1/043, F02C 6/18

(54) **Génération d'électricité dans une turbomachine au moyen d'un moteur Stirling**
Erzeugung elektrischer Energie in einem Turbotriebwerk mittels eines Stirlingmotors
Generation of electricity in a turbomachine by means of a stirling engine

(30) Priorité: 30.08.2007 FR 0706072
(43) Date de publication de la demande: 04.03.2009
(73) Titulaire: Snecma, 75015 Paris (FR)
(72) Inventeur: Foucault, Alain, 77820 Le Chatelet en Brie (FR); Juchauld, Etienne, 77920 Samois sur Seine (FR); Pierrot, Arnaud, 77350 Le Mee sur Seine (FR); Rousselin, Stéphane, 77850 Hericy (FR)
(74) Mandataire: Ramey, Daniel

(56) Documents cités:
- DE-A1- 3 031 872
- GB-A- 2 041 090
- JP-A- 1 151 724
- US-A- 4 796 430
- US-A- 5 269 133

## Description

La présente invention concerne la génération d'électricité dans les turbomachines, en particulier à double flux, telles que les turboréacteurs d'avions.

L'alimentation électrique des avions est en général assurée par des génératrices électromécaniques intégrées aux turboréacteurs de ces avions et entraînées par une prise de puissance sur des compresseurs haute pression des turboréacteurs.

La puissance mécanique ainsi prélevée n'étant pas utilisée pour la propulsion, ce type de générateur électrique pénalise de façon sensible les performances des turboréacteurs.

Il est déjà connu d'entraîner un générateur électrique au moyen d'un moteur fonctionnant selon un cycle de Stirling, mais un tel générateur est une machine lourde conçue pour fonctionner en co-génération avec des moyens de chauffage d'immeubles ou de bâtiments comme décrit par exemple dans le document GB-A-2 391 299, et n'est pas adapté à une utilisation sur une turbomachine aéronautique.

L'invention a notamment pour but d'apporter une solution simple, économique et efficace au problème de la génération d'électricité dans les turbomachines à double flux, permettant d'éviter les inconvénients de la technique connue.

Elle a également pour but la génération d'électricité dans une turbomachine selon un principe de cogénération, en tirant parti de l'énergie thermique dissipée dans les gaz d'échappement.

Elle a encore pour but l'intégration d'un moteur Stirling dans une turbomachine d'une façon qui minimise l'augmentation du poids total de la turbomachine et l'encombrement du moteur Stirling et des moyens associés de génération d'énergie électrique.

Le document DE-A1-30 31 872 décrit un moteur Stirling.

Le document GB-A-2 041 090 décrit une turbomachine correspondant sensiblement au préambule de la revendication 1.

L'invention propose à cet effet une turbomachine à double flux, comprenant un carter d'échappement relié par des bras radiaux à des parois cylindriques coaxiales délimitant des veines d'écoulement d'un flux primaire de gaz d'échappement chauds et d'un flux secondaire d'air froid, caractérisée en ce qu'elle est équipée d'au moins un moteur thermique à cycle de Stirling monté en bout d'un bras radial et comportant deux échangeurs thermiques de chauffage et de refroidissement respectivement d'un fluide de travail, formés dans des parties du bras radial interceptant respectivement le flux primaire et le flux secondaire

Le moteur thermique à cycle de Stirling, couramment appelé « moteur Stirling » ou moteur à air chaud, permet de tirer parti de la différence de température entre le flux primaire de gaz d'échappement et le flux secondaire d'air froid pour générer de l'énergie mécanique, susceptible d'être convertie en énergie électrique. Ce type de moteur se caractérise par un très bon rendement qui peut atteindre 40% du maximum théorique, par une très bonne fiabilité et une grande longévité.

Le cycle théorique de fonctionnement d'un tel moteur comprend quatre phases successives : une phase de chauffage isochore suivie d'une phase de détente isotherme du fluide de travail, puis une phase de refroidissement isochore suivie d'une phase de compression isotherme du fluide de travail.

Le moteur Stirling comprend également une chambre de travail située en dehors des flux primaire et secondaire et dans laquelle est agencé un piston déplaceur associé à un élément mobile d'un système de génération d'énergie, la chambre de travail communiquant avec les échangeurs pour la circulation du fluide de travail.

Avantageusement, les échangeurs de chauffage et de refroidissement sont reliés par un régénérateur destiné à accumuler de l'énergie thermique pendant la phase de refroidissement du cycle de Stirling et céder de l'énergie thermique pendant la phase de réchauffement.

Ce régénérateur est un échangeur formant accumulateur thermique qui permet d'augmenter les performances du moteur Stirling.

Selon une autre caractéristique de l'invention, le régénérateur est logé dans une partie du bras radial située entre les veines d'écoulement du flux primaire et du flux secondaire, afin que les échanges thermiques entre le fluide de travail et le régénérateur ne soient pas perturbés par les flux primaire et secondaire.

Pour des raisons analogues, la chambre de travail est de préférence agencée à l'extrémité radialement interne du bras radial et radialement à l'intérieur de la paroi cylindrique interne délimitant la veine d'écoulement du flux primaire.

Selon un mode de réalisation préféré de l'invention, le piston déplaceur est agencé de manière à partager de façon étanche la chambre de travail en deux zones, dont la première est reliée à l'échangeur de chauffage et dont la seconde est reliée à l'échangeur de refroidissement par un conduit thermiquement isolé traversant l'échangeur de chauffage et le régénérateur.

Cet agencement permet de réduire l'encombrement du dispositif tout en ménageant un espace pour le régénérateur.

Dans une première forme de réalisation, le piston déplaceur comporte une cavité cylindrique s'étendant dans la direction de déplacement du piston et à l'intérieur de laquelle est monté un aimant permanant fixe, le piston déplaceur étant pourvu d'un enroulement de fil électrique agencé autour de la cavité cylindrique et relié à une interface électrique pour l'entraînement du piston déplaceur.

Dans une autre forme de réalisation, la chambre de travail comprend une roue reliée à l'élément mobile du système de génération d'énergie et au piston déplaceur par des biellettes.

Avantageusement, le moteur Stirling est scellé et rempli d'un gaz inerte sous pression tel que l'hélium. En variante, il peut comprendre une amenée de gaz sous pression, par exemple dans la chambre de travail ou dans l'un des échangeurs, de manière à augmenter la pression du fluide de travail et par conséquent, les performances du moteur Stirling.

Le bras radial comporte avantageusement des ailettes d'échange thermique sur sa surface externe et/ou interne située dans les veines d'écoulement des flux primaire et secondaire.

Dans le mode de réalisation préféré de l'invention, l'élément mobile du système de génération d'énergie est supporté par un moyen élastique de rappel fixé dans la chambre de travail et comporte une cavité cylindrique s'étendant dans sa direction de déplacement et à l'intérieur de laquelle est disposé un aimant permanent fixe, l'élément mobile étant pourvu d'un enroulement de fil électrique agencé autour de la cavité cylindrique et relié à une interface électrique pour permettre une conversion de l'énergie mécanique en énergie électrique.

L'invention permet ainsi de générer de l'électricité, pour pourvoir à l'alimentation électrique d'un aéronef par exemple, et cela sans devoir prélever de l'énergie mécanique utile dans la turbomachine.

L'invention sera mieux comprise et d'autres détails, avantages et caractéristiques de celle-ci apparaîtront plus clairement à la lecture de la description suivante faite à titre d'exemple non limitatif, en référence aux dessins annexés dans lesquels :
- la figure 1 est une vue schématique en coupe axiale d'une turbomachine selon l'invention ;
- la figure 2 est une vue schématique partielle en coupe longitudinale et à plus grande échelle d'un bras de carter d'échappement de la turbomachine de la figure 1 ;
- la figure 3 est une vue semblable à la figure 2 et illustre la phase de refroidissement du cycle de Stirling du moteur thermique intégré au bras de carter d'échappement ;
- la figure 4 est une vue semblable à la figure 3 et illustre la phase de compression du cycle de Stirling ;
- la figure 5 est une vue semblable à la figure 3 et illustre la phase de chauffage du cycle de Stirling ;
- la figure 6 est une vue semblable à la figure 3 et illustre la phase de détente du cycle de Stirling ;
- la figure 7 est une vue semblable à la figure 2 et représente une variante de l'invention.

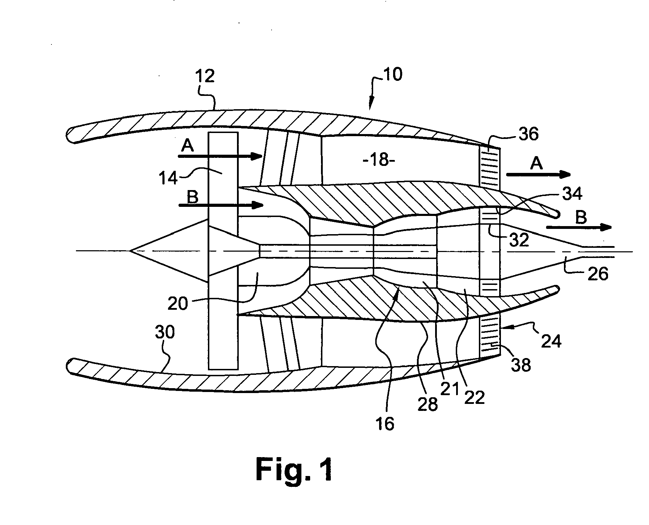

La figure 1 représente un turboréacteur à double flux 10 et comportant une nacelle 12 dans laquelle une roue de soufflante 14 est montée en amont d'un corps de moteur 16 comprenant essentiellement, d'amont en aval, un compresseur 20, une chambre de combustion 21, une turbine 22, un carter d'échappement 24 et un cône d'éjection 26.

La roue de soufflante 14 est entraînée en rotation par la turbine 22 du turboréacteur, d'une façon bien connue de l'homme du métier. Pendant le fonctionnement du moteur, la soufflante 14 génère un flux d'air secondaire A, qui s'écoule vers l'arrière autour du turboréacteur dans une conduite de soufflante 18, et qui fournit une partie de la poussée du moteur. Une partie de l'air entrant dans le moteur forme un flux primaire B qui alimente le compresseur d'entrée 20 du turboréacteur, puis est mélangé à du carburant dans la chambre de combustion 21. Les gaz de combustion sortant de la chambre de combustion entraînent la turbine 22 puis sont éjectés entre deux parois coaxiales 32, 34 du carter d'échappement 24 et sortent du turboréacteur en s'écoulant le long du cône d'éjection 26.

La conduite de soufflante 18 est formée de deux parois coaxiales sensiblement cylindriques, respectivement interne 28 et externe 30. La paroi interne 28 de la conduite de soufflante est généralement appelée I.F.D. (Inner Fan Duct) tandis que la paroi externe 30 est généralement appelée O.F.D. (Outer Fan Duct) et est entourée par la nacelle 12.

Les deux parois coaxiales, respectivement interne 32 et externe 34, du carter d'échappement 24 sont reliées par des bras radiaux structuraux 36.

Dans l'exemple représenté, chaque bras radial 36 du carter d'échappement 24 relie les parois coaxiales 32, 34 de ce carter aux parois cylindriques 28, 30 de la conduite de soufflante 18, de sorte qu'une partie du bras 36 intercepte le flux primaire B tandis qu'une autre partie de ce bras intercepte le flux secondaire A. En variante, le bras 36 peut ne pas s'étendre jusqu'à la paroi externe 30.

Des ailettes 38 sont avantageusement formées sur la surface externe des bras radiaux 36, au niveau des parties de ces bras interceptant les flux primaire B et secondaire A, et sont schématiquement représentées en figure 1. Leur fonction sera expliquée par la suite.

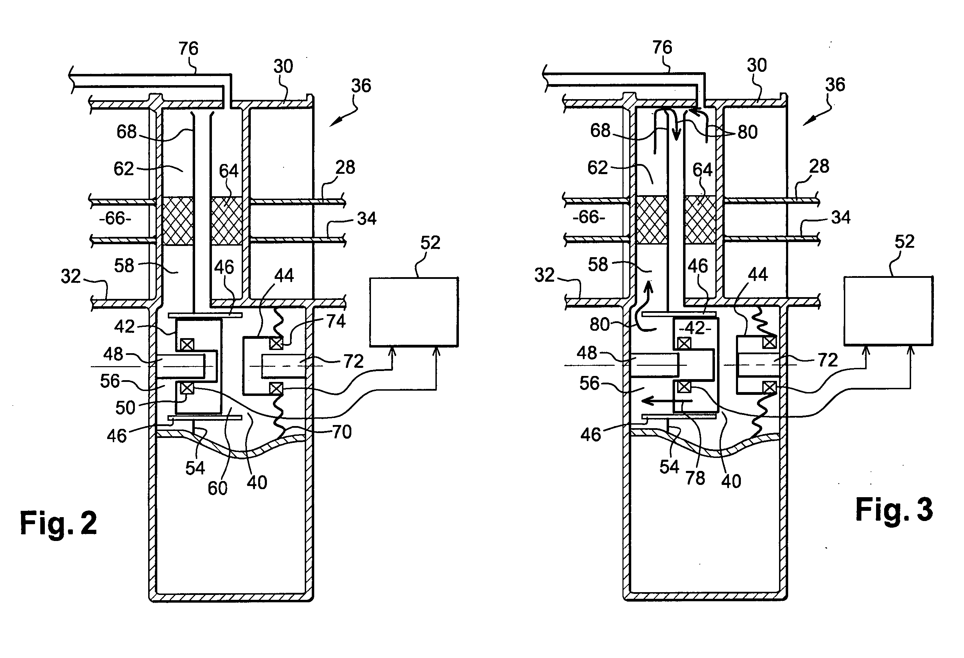

La figure 2 est une vue en coupe et à plus grande échelle d'un bras radial 36 du carter d'échappement 24, dans lequel sont logés les échangeurs thermiques d'un moteur à cycle de Stirling.

Comme cela sera expliqué dans ce qui suit, ce moteur est conçu et agencé pour utiliser au mieux l'espace disponible dans le bras radial 36 et tirer parti de la différence de température entre les gaz chauds du flux primaire B et l'air froid du flux secondaire A pour générer de l'énergie électrique ou mécanique.

Dans une partie radialement interne par rapport à l'axe de la turbomachine, le moteur Stirling comprend une chambre de travail 40 dans laquelle sont agencés un piston déplaceur 42 et un piston de travail 44 formé par un élément mobile d'un système de génération d'énergie électrique.

Le piston déplaceur 42 est logé dans un conduit 46, par exemple de forme cylindrique et s'étendant de l'amont vers l'aval, et est formé d'une pièce de forme complémentaire à celle du conduit, pour coulisser dans ce conduit de façon étanche en interdisant l'écoulement d'air autour du piston dans le conduit. Le piston déplaceur 42 comprend une cavité cylindrique ouverte, par exemple du côté amont du piston, et d'axe parallèle à et de préférence confondu avec l'axe du piston, dans laquelle est monté un aimant cylindrique 48 fixé à une paroi de la chambre de travail 40. Le piston comprend également un bobinage électrique 50 disposé autour de la cavité et destiné à permettre un entraînement électromagnétique du piston 42 en translation dans son conduit 46, ce bobinage étant relié à une interface électrique 52 comprenant par exemple un circuit déphaseur.

Le conduit 46 du piston déplaceur 42 est monté dans un orifice de forme correspondante d'une plaque 54 reliée aux parois du bras radial 36 de sorte que le piston déplaceur 42 et la plaque 54 partagent de manière étanche la chambre de travail 40 en une zone amont 56 qui communique avec un échangeur de chauffage 58 situé dans la partie du bras qui intercepte le flux primaire B, et une zone aval 60 qui communique avec un échangeur de refroidissement 62 disposé dans la partie du bras qui intercepte le flux secondaire A, située à l'extrémité radialement externe de ce bras 36. La chambre de travail 40 et les échangeurs de chauffage 58 et de refroidissement 62 contiennent un fluide de travail, tel que de l'air ou un gaz inerte sous pression, que le piston déplaceur 42 repousse alternativement dans l'échangeur de chauffage 58 ou dans l'échangeur de refroidissement 62, comme cela sera précisé dans ce qui suit. L'agencement des échangeurs de chauffage 58 et de refroidissement 62, qui sont respectivement en contact thermique avec le flux primaire B de gaz chauds et avec le flux secondaire A d'air froid, permet un échange de chaleur du flux primaire vers le fluide de travail lorsque celui-ci se trouve dans l'échangeur de chauffage 58, et du fluide de travail vers le flux secondaire, lorsque le fluide de travail se trouve dans l'échangeur de refroidissement 62.

Afin de maximiser les échanges de chaleur précités et comme cela a déjà été mentionné en référence à la figure 1, le bras radial 36 peut comporter des ailettes 38 sur sa surface externe et des ailettes sur sa surface interne. Les ailettes externes s'étendent selon une direction sensiblement parallèle à l'axe de la turbomachine de manière à réduire au mieux leur impact aérodynamique sur l'écoulement des flux primaire et secondaire. Ces ailettes 38 permettent également de renforcer la rigidité du bras radial.

Dans le mode de réalisation représenté sur la figure 2, le moteur Stirling comprend en outre un échangeur thermique 64 d'un type connu, appelé régénérateur. Ce régénérateur 64 est formé par exemple de mousse ou de lamelles en métal et est logé dans une partie du bras radial située entre les veines d'écoulement des flux primaire et secondaire, dans un espace 66 couramment appelé interveine. Cette disposition permet d'éviter que des échanges de chaleur entre le fluide de travail et ce régénérateur 64 ne soient perturbés par des échanges thermiques avec les flux primaire et secondaire.

II est avantageux que les volumes des échangeurs 58 et 62, qui sont des volumes « morts », soient minimisés et que les surfaces d'échange thermique et le volume de la chambre de travail soient augmentés.

La chambre de travail 40 et l'échangeur de refroidissement 62 sont reliés par un conduit de liaison 68 thermiquement isolé, qui traverse l'échangeur de chauffage 58 et le régénérateur 64. Avantageusement, le conduit 68 permet aussi de réduire le volume « mort » de fluide contenu dans les échangeurs 58 et 62.

La chambre de travail 40 comporte un système de génération d'énergie électrique du type linéaire comprenant un piston cylindrique creux 44 ouvert vers l'aval, qui est supporté par une membrane élastique étanche de rappel 70. L'ensemble formé par le piston 44 et la membrane élastique 70 forme une paroi mobile étanche d'extrémité de la chambre de travail 40, de sorte qu'une translation du piston 44 vers l'amont ou vers l'aval provoque une réduction, respectivement un accroissement, du volume de la chambre de travail 40.

Un aimant 72, par exemple de forme cylindrique, est fixé sur une paroi de la chambre de travail 40 de manière à être inséré dans le piston cylindrique 44 du système de génération d'énergie. Ce piston comporte un bobinage électrique 74 relié à l'interface électrique 52 afin de réaliser une conversion de l'énergie mécanique du piston 44 en énergie électrique, lorsque celui-ci est déplacé en translation selon son axe, en regard de l'aimant 72.

Le moteur Stirling comporte avantageusement une amenée de fluide sous pression 76, reliée à une réserve de gaz inerte tel que l'hélium, avec une valve destinée aux opérations de maintenance, pour augmenter la pression du fluide de travail et ainsi améliorer le rendement énergétique du moteur Stirling.

En fonctionnement, le moteur Stirling décrit un cycle thermodynamique comportant quatre phases représentées respectivement dans les figures 3 à 6.

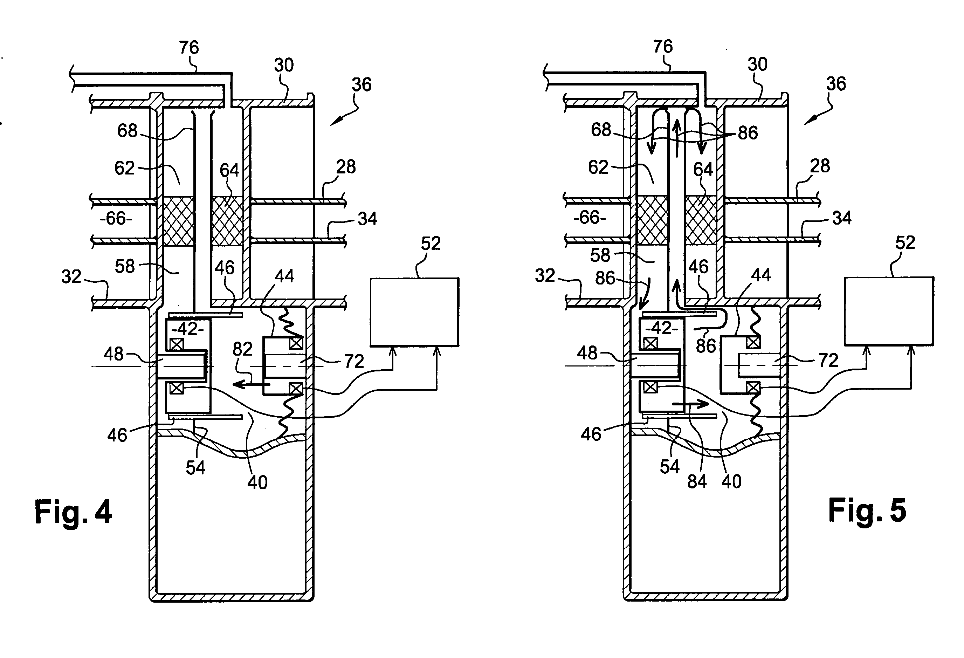

Sur la figure 3, le moteur Stirling se trouve dans une phase de refroidissement isochore du fluide de travail. Pendant cette phase, l'interface électrique 52 commande un déplacement progressif 78 du piston déplaceur 42 en translation vers l'amont, jusqu'à une position extrême où il vient sensiblement en butée contre le bras radial 36 (cette position du piston déplaceur est visible sur la figure 4). Ce mouvement du piston déplaceur réduit le volume de la zone 56 de la chambre de travail, et pousse une majeure partie 80 du fluide de travail contenu dans l'échangeur de chauffage 58 à travers le régénérateur 64 et l'échangeur de refroidissement 62 pour remplir la partie aval de la chambre de travail. Le fluide de travail cède de l'énergie thermique au régénérateur 64 lors de son passage à travers ce dernier, et traverse l'échangeur de refroidissement 62 pour arriver dans la partie aval de la chambre de travail.

Le fluide de travail subit ensuite une phase de compression isotherme, représentée sur la figure 4. Le volume occupé par le fluide de travail diminue au fur et à mesure que sa pression augmente, du fait d'un déplacement vers l'amont 82 du piston 44 du système de génération d'énergie électrique, sous l'effet de la membrane élastique de rappel 70, jusqu'à une position extrême d'éloignement du piston 44 par rapport à son aimant 72 (visible sur la figure 5).

A la phase de compression succède une phase de chauffage isochore du fluide de travail, représentée sur la figure 5, et au cours de laquelle l'interface électrique 52 commande une translation vers l'aval 84 du piston déplaceur 42, jusqu'à une position extrême d'éloignement de ce piston par rapport à son aimant 48, de manière à réduire le volume de la zone 60 de la chambre de travail, ce qui tend à pousser une partie 86 au moins du fluide de travail contenu dans l'échangeur de refroidissement 62 à travers le régénérateur 64 et l'échangeur de chauffage 58 vers la partie amont 56 de la chambre de travail. Lors de son passage à l'intérieur du régénérateur 64, le fluide de travail reçoit de l'énergie thermique stockée dans le régénérateur, et se trouve donc réchauffé en arrivant dans l'échangeur de chauffage 58.

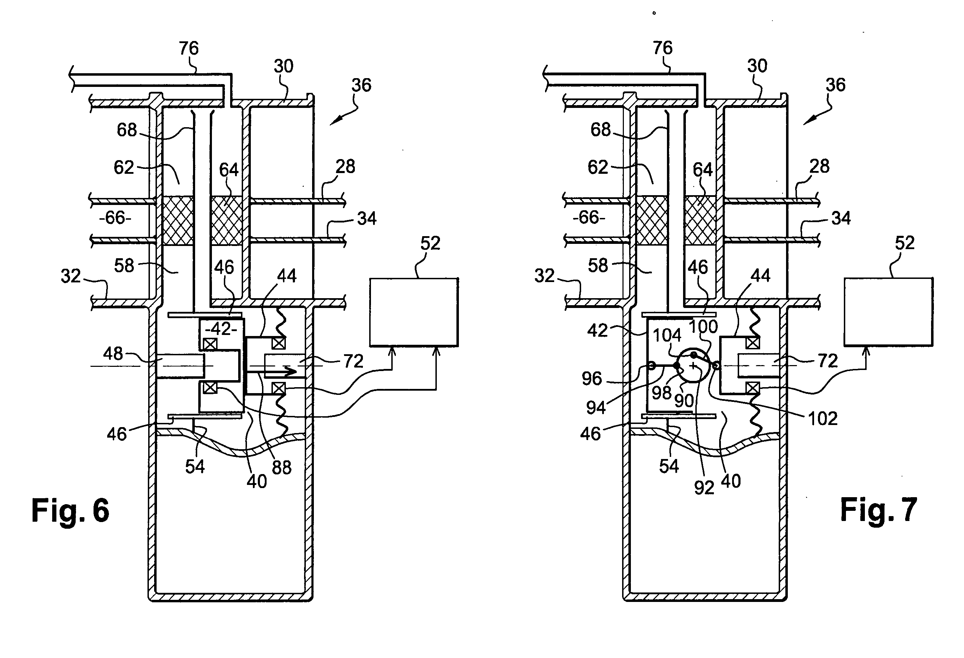

Le cycle de Stirling se termine par une phase de détente isotherme du fluide de travail, représentée sur la figure 6. Au cours de cette phase, le volume du fluide de travail s'accroît tandis que sa pression diminue. L'augmentation de volume de ce fluide provoque un déplacement vers l'aval 88 du piston 44 du système de génération d'énergie et de la membrane élastique 70 qui le supporte, de sorte que le piston revient dans la position qu'il occupe pendant la phase de refroidissement.

Au cours d'un cycle de Stirling, le piston 44 du système de génération d'énergie accomplit donc un va et vient autour de son aimant 70, ce qui génère de l'énergie électrique qui peut être récupérée au moyen de l'interface électrique 52.

L'invention permet donc la génération d'énergie électrique à partir de l'énergie thermique contenue dans les gaz d'échappement d'une turbomachine, en utilisant un moteur thermique à cycle de Stirling.

La figure 7 représente un autre mode de réalisation de l'invention, dans lequel l'entraînement du piston déplaceur 42 est assuré par un dispositif mécanique d'un type courant dans les moteurs Stirling. Le piston est une pièce à section en U ouverte vers l'aval et le dispositif d'entraînement de ce piston comprend une roue 90 qui est disposée dans la chambre de travail 40, entre le piston déplaceur 42 et le piston 44 du système de génération d'énergie, et qui est montée rotative sur un axe 92 perpendiculaire à un plan médian du bras radial 36 et fixé aux parois de ce bras. La roue 90 est reliée au piston déplaceur 42 par une première biellette 94 dont l'extrémité amont est montée dans une chape 96, ou tout autre moyen analogue, solidaire du piston 42 et disposée sur sa face aval, par exemple au centre de cette face aval, l'extrémité aval de la biellette 94 étant montée dans une chape 98 ou analogue fixée sur la périphérie de la roue 90. Cette roue est également reliée au piston 44 du système de génération d'énergie par une seconde biellette 100 dont l'extrémité aval est montée dans une chape 102 ou analogue solidaire de ce piston 44 et disposée sur sa face amont, par exemple au centre de cette face amont, l'extrémité amont de la biellette 100 étant montée dans une chape 104 ou analogue fixée à la roue 90, par exemple à une distance du centre de la roue égale au quart du rayon de cette roue. Les chapes de fixation des première et seconde biellettes 94, 100 sur la roue 90 font avec le centre de la roue un angle de 90 degrés environ de sorte que le mouvement de la seconde biellette 100 présente un retard d'un quart de cycle environ par rapport au mouvement de la première biellette 94. La roue 90 forme également un volant d'inertie du système de génération d'énergie.

L'invention n'est pas limitée à la génération d'énergie électrique et il est bien entendu possible d'exploiter directement l'énergie mécanique fournie par le piston du système de conversion d'énergie, que ce soit pour l'entraînement d'un équipement selon un mouvement de va et vient en translation semblable au mouvement du piston, ou pour un entraînement en rotation par l'utilisation d'un système à bielle et roue ou à bielle et manivelle par exemple, pour convertir le mouvement du piston en mouvement de rotation.

D'un point de vue général, l'invention permet de mettre à profit de l'énergie thermique perdue dans une turbomachine en suivant un principe de cogénération. Dans un turboréacteur d'aéronef, par exemple, la génération d'électricité nécessite en général un prélèvement d'énergie mécanique au niveau du compresseur du turboréacteur pour alimenter un générateur électromécanique. L'invention évite d'avoir à réaliser ce prélèvement d'énergie mécanique utile en utilisant l'énergie thermique des gaz d'échappement, et permet ainsi une amélioration des performances du turboréacteur, se traduisant par un gain en consommation spécifique de l'ordre du pourcent.

## Revendications

1. Turbomachine à double flux (10), comprenant un carter d'échappement (24) relié par des bras radiaux (36) à des parois cylindriques coaxiales (28, 30, 32, 34) délimitant des veines d'écoulement d'un flux primaire (B) de gaz d'échappement chauds et d'un flux secondaire (A) d'air froid, la turbomachine étant **caractérisée en ce qu'**elle est équipée d'au moins un moteur thermique à cycle de Stirling monté en bout d'un bras radial (36) et comportant deux échangeurs thermiques, de chauffage (58) et de refroidissement (62) respectivement d'un fluide de travail, formés dans des parties du bras radial (36) interceptant respectivement le flux primaire (B) et le flux secondaire (A).

2. Turbomachine (10) selon la revendication 1, **caractérisée en ce que** les deux échangeurs de chauffage (58) et de refroidissement (62) sont reliés par un régénérateur (64) destiné à accumuler de l'énergie thermique pendant la phase de refroidissement du cycle de Stirling et céder de l'énergie thermique pendant la phase de réchauffement.

3. Turbomachine (10) selon la revendication 2, **caractérisée en ce que** le régénérateur (64) est logé dans une partie du bras radial (36) située entre les veines d'écoulement du flux primaire (B) et du flux secondaire (A).

4. Turbomachine selon l'une des revendications précédentes, **caractérisée en ce que** le moteur Stirling comprend une chambre de travail (40) située en dehors des flux primaire (B) et secondaire (A) et dans laquelle est agencé un piston déplaceur (42) associé à un élément mobile (44) d'un système de génération d'énergie, cette chambre de travail (40) communiquant avec les deux échangeurs (58, 62) pour la circulation d'un fluide de travail.

5. Turbomachine (10) selon la revendication 4, **caractérisée en ce que** la chambre de travail (40) est agencée à l'extrémité radialement interne du moteur thermique.

6. Turbomachine (10) selon la revendication 4 ou 5, **caractérisée en ce que** le piston déplaceur (42) est agencé de manière à partager de façon étanche la chambre de travail (40) en deux zones, dont la première (56) est reliée à l'échangeur de chauffage (58) et dont la seconde (60) est reliée à l'échangeur de refroidissement (62).

7. Turbomachine (10) selon la revendication 6, **caractérisée en ce que** la seconde zone (60) est reliée à l'échangeur de refroidissement (62) par un conduit thermiquement isolé (68) traversant l'échangeur de chauffage (58) et le régénérateur (64).

8. Turbomachine (10) selon l'une des revendications 4 à 7, **caractérisée en ce que** le piston déplaceur (42) comporte une cavité cylindrique s'étendant dans la direction de déplacement du piston et à l'intérieur de laquelle est montée un aimant permanant fixe (48), le piston déplaceur étant pourvu d'un enroulement de fil électrique (50) agencé autour de la cavité cylindrique et relié à une interface électrique (52) pour l'entraînement du piston déplaceur (42).

9. Turbomachine (10) selon l'une des revendications 4 à 7, **caractérisée en ce que** la chambre de travail (40) comprend une roue (90) reliée à l'élément mobile (44) du système de génération d'énergie et au piston déplaceur (42) par des biellettes (94, 100), pour l'entraînement du piston déplaceur (42).

10. Turbomachine (10) selon l'une des revendications 4 à 9, **caractérisée en ce que** le moteur Stirling comprend une amenée de gaz inerte sous pression (76) dans la chambre de travail (40) ou l'un des échangeurs (58, 62).

11. Turbomachine (10) selon l'une des revendications 4 à 10, **caractérisée en ce que** l'élément mobile (44) du système de génération d'énergie est supporté par un moyen élastique de rappel (70) fixé dans la chambre de travail (40) et comporte une cavité cylindrique s'étendant dans sa direction de déplacement et à l'intérieur de laquelle est disposé un aimant permanent fixe (72), l'élément mobile (44) étant pourvu d'un enroulement de fil électrique (74) agencé autour de la cavité cylindrique et relié à une interface électrique (52) pour permettre une conversion de l'énergie mécanique en énergie électrique.

12. Turbomachine (10) selon l'une des revendications précédentes, **caractérisée en ce que** le bras radial (36) comporte des ailettes d'échange thermique (38) sur sa surface externe et/ou interne située dans les veines d'écoulement des flux primaire (B) et secondaire (A).

## Claims

1. A dual-flow turbomachine (10), comprising an exhaust casing (24) linked by radial arms (36) to coaxial cylindrical walls (28, 30, 32, 34) delimiting flow (B) arteries for a primary flow of hot exhaust gases and for a secondary flow (A) of cold air, which is equipped with at least one Stirling cycle thermal engine mounted at the end of a radial arm (36) and comprising two thermal exchangers, for heating (58) and cooling (62) respectively a working fluid, which are formed in parts of the radial arm (36) respectively intercepting the primary flow (B) and the secondary (A) flow.

2. The turbomachine (10) as claimed in claim 1, wherein the two heating (58) and cooling (62) exchangers are linked by a regenerator (64) intended to accumulate thermal energy during the cooling phase of the Stirling cycle and deliver thermal energy during the reheating phase.

3. The turbomachine (10) as claimed in claim 2, wherein the regenerator (64) is housed in a part of the radial arm (36) located between the flow arteries of the primary flow (B) and of the secondary (A) flow.

4. The turbomachine as claimed in one of the preceding claims, wherein the Stirling engine comprises a working chamber (40) located outside the primary (B) and secondary (A) flows and in which is arranged a displacing piston (42) associated with a moving element (44) of an energy generation system.

5. The turbomachine (10) as claimed in the preceding claim, wherein the working chamber (40) is arranged at the radially internal end of the thermal engine.

6. The turbomachine (10) as claimed in claim 4 or 5, wherein the displacing piston (42) is arranged in such a way as to divide in a seal-tight manner the working chamber (40) into two zones, the first (56) of which is linked to the heating exchanger (58) and the second (60) of which is linked to the cooling exchanger (62).

7. The turbomachine (10) as claimed in claim 6, wherein the second zone (60) is linked to the cooling exchanger (62) by a thermally insulated duct (68) passing through the heating exchanger (58) and the regenerator (64).

8. The turbomachine (10) as claimed in one of claims 4 to 7, wherein the displacing piston (42) comprises a cylindrical cavity extending in the direction of displacement of the piston and inside which is mounted a fixed permanent magnet (48), the displacing piston being provided with a winding (50) of electrical wire arranged around the cylindrical cavity and linked to an electrical interface (52) to drive the displacing piston (42).

9. The turbomachine (10) as claimed in one of claims 4 to 7, wherein the working chamber (40) comprises a wheel (90) linked to the moving element (44) of the energy generation system and to the displacing piston (42) by link rods (94, 100), to drive the displacing piston (42).

10. The turbomachine (10) as claimed in one of claims 4 to 9, wherein the Stirling engine comprises a pressurized inert gas inlet (76) into the working chamber (40) or one of the exchangers (58, 62).

11. The turbomachine (10) as claimed in one of claims 4 to 10, wherein the moving element (44) of the energy generation system is supported by an elastic return means (70) fixed in the working chamber (40) and comprises a cylindrical cavity extending in its direction of displacement and inside which is positioned a fixed permanent magnet (72), the moving element (44) being provided with a winding (74) of electrical wire arranged around the cylindrical cavity and linked to an electrical interface (52) to enable mechanical energy to be converted into electrical energy.

12. The turbomachine (10) as claimed in one of the preceding claims, wherein the radial arm (36) comprises thermal exchange fins (38) on its outer and/or inner surface located in the flow arteries of the primary (B) and secondary (A) flows.

## Patentansprüche

1. Zweikreis-Turbotriebwerk (10) mit einem Ausstoßgehäuse (24), das durch radiale Arme (36) mit koaxialen, zylindrischen Wänden (28, 30, 32, 34) verbunden ist, die Strömungsbahnen für einen Primärstrom (B) von heißen Ausstoßgasen und für einen Sekundärstrom (A) kalter Luft abgrenzen,
**dadurch gekennzeichnet,**
**dass** es mit mindestens einem Stirlingmotor ausgerüstet ist, der am Ende eines radialen Arms (36) eingebaut ist und zwei Wärmetauscher zur Erwärmung (58) bzw. zur Kühlung (62) eines Arbeitsfluids aufweist, die in Teilen des radialen Arms (36) gebildet sind, welche den Primärstrom (B) bzw. den Sekundärstrom (A) einfangen.

2. Turbotriebwerk (10) nach Anspruch 1,
**dadurch gekennzeichnet,**
**dass** die beiden Wärmetauscher zur Erwärmung (58) bzw. zur Kühlung (62) durch einen Regenerator (64) miteinander verbunden sind, der dazu bestimmt ist, während der Abkühlungsphase des Stirling-Zyklus Wärmeenergie zu akkumulieren und während der Erwärmungsphase Wärmeenergie abzugeben.

3. Turbotriebwerk (10) nach Anspruch 2,
**dadurch gekennzeichnet,**
**dass** der Regenerator (64) in einem Teil des radialen Arms (36) gelagert ist, der sich zwischen den Strömungsbahnen des Primärstroms (B) und des Sekundärstroms (A) befindet.

4. Turbotriebwerk nach einem der vorherigen Ansprüche,
**dadurch gekennzeichnet,**
**dass** der Stirlingmotor eine Arbeitskammer (40) enthält, die sich außerhalb des Primärstroms (B) und des Sekundärstroms (A) befindet und in der ein Schiebekolben (42) in Verbindung mit einem bewegbaren Element (44) eines Energieerzeugungssystems vorgesehen ist, wobei diese Arbeitskammer (40) mit den beiden Wärmetauschern (58, 62) für die Zirkulation eines Arbeitsfluids kommuniziert.

5. Turbotriebwerk (10) nach Anspruch 4,
**dadurch gekennzeichnet,**
**dass** die Arbeitskammer (40) am radial inneren Ende des Stirlingmotors ausgeführt ist.

6. Turbotriebwerk (10) nach Anspruch 4 oder 5,
**dadurch gekennzeichnet,**
**dass** der Schiebekolben (42) dergestalt ausgeführt ist, dass er die Arbeitskammer (40) mit Dichtigkeit in zwei Bereiche teilt, von denen der erste (56) mit dem Wärmetauscher zur Erwärmung (58) und der zweite (60) mit dem Wärmetauscher zur Kühlung (62) verbunden ist.

7. Turbotriebwerk (10) nach Anspruch 6,
**dadurch gekennzeichnet,**
**dass** der zweite Bereich (60) mit dem Wärmetauscher zur Kühlung (62) durch eine wärmeisolierte Leitung (68) verbunden ist, die durch den Wärmetauscher zur Erwärmung (58) und durch den Regenerator (64) verläuft.

8. Turbotriebwerk (10) nach einem der Ansprüche 4 bis 7,
**dadurch gekennzeichnet,**
**dass** der Schiebekolben (42) einen sich in der Schubrichtung des Kolbens erstreckenden zylindrischen Hohlraum enthält, in dem ein feststehender Dauermagnet (48) eingebaut ist, wobei der Schiebekolben mit einer Elektrodrahtwicklung (50) versehen ist, die um den zylindrischen Hohlraum herum ausgeführt ist und für den Antrieb des Schiebekolbens (42) mit einer elektrischen Schnittstelle (52) verbunden ist.

9. Turbotriebwerk (10) nach einem der Ansprüche 4 bis 7,
**dadurch gekennzeichnet,**
**dass** die Arbeitskammer (40) ein Rad (90) enthält, das zwecks Antrieb des Schiebekolbens (42) mit dem bewegbaren Element (44) des Energieerzeugungssystems und mit dem Schiebekolben (42) durch Pleuelstangen (94, 100) verbunden ist.

10. Turbotriebwerk (10) nach einem der Ansprüche 4 bis 9,
**dadurch gekennzeichnet,**
**dass** der Stirlingmotor eine Zuführung für unter Druck stehendes, inertes Gas (76) in die Arbeitskammer (40) oder einen der Wärmetauscher (58, 62) aufweist.

11. Turbotriebwerk (10) nach einem der Ansprüche 4 bis 10,
**dadurch gekennzeichnet,**
**dass** das bewegbare Element (44) des Energieerzeugungssystems von einem elastischen Rückstellmittel (70), das in der Arbeitskammer (40) befestigt ist, getragen wird und einen sich in seiner Schubrichtung erstreckenden zylindrischen Hohlraum enthält, in dem ein feststehender Dauermagnet (72) angeordnet ist, wobei das bewegbare Element (44) mit einer Elektrodrahtwicklung (74) versehen ist, die um den zylindrischen Hohlraum herum ausgeführt ist und mit einer elektrischen Schnittstelle (52) verbunden ist, um eine Umsetzung der mechanischen Energie in elektrische Energie zu ermöglichen.

12. Turbotriebwerk (10) nach einem der vorherigen Ansprüche,
**dadurch gekennzeichnet,**
**dass** der radiale Arm (36) an seiner äußeren und/oder inneren Oberfläche, die sich in den Strömungsbahnen des Primärstroms (B) bzw. des Sekundärstroms (A) befinden, Wärmetauschrippen (38) aufweist.
